# EUROPEAN PATENT SPECIFICATION

(11) **EP 2 849 966 B1**
(45) Date of publication and mention of the grant of the patent: **23.03.2016**
(21) Application number: 13730311.1
(22) Date of filing: 10.05.2013
(51) Int. Cl.: B29C 43/02, B29K 23/00, B29D 99/00, B60N 3/04

(54) **MAT**
MATTE
TAPIS

(30) Priority: 15.05.2012 IT FI20120093
(43) Date of publication of application: 25.03.2015
(73) Proprietor: Masi, Antonio, 50142 Firenze (IT)
(72) Inventor: Masi, Antonio, 50142 Firenze (IT)
(74) Representative: Paparo, Aldo
(86) International application number: PCT/IB2013/000898
(87) International publication number: WO 2013/171559

(56) References cited:
- WO-A1-99/29949
- WO-A1-2006/116342
- WO-A1-2012/054692
- WO-A2-2005/103358

## Description

### Technical field

This invention relates to mat, in particular a mat for motor vehicles. The mat can be used for protecting the internal surface of automobiles, vans, trucks, coaches, motor caravans and vehicles in general.

### Background art

Mats for motor vehicles are known in the prior art. These mats comprise a a supporting layer, made, for example, from rubber, on which filaments are anchored. These filaments make a carpet effect on the upper surface of the mat. In detail, the supporting layer of the mat has edges along which the filaments are fixed to the support also by a strip of fabric having a pair of flaps, adjacent, respectively, to the upper surface and to the lower surface of the supporting layer and sewn together. In other words, the strip of fabric delimits the outer edge of the mat. Document WO2006/116342 (corresponding to the preamble of claim 1) shows an example of a mat having a delimited outer edge.

Disadvantageously, the mat described above must be made to measure to cover a precise zone of a predetermined model of an automobile or vehicle. In other words, four different mats will be needed to cover the floor of an automobile, because each is made to measure for the zone it must cover. For example, the mat designed for the zone of the front passenger seat cannot be used for the rear seats. For similar reasons, a mat made for a predetermined model of automobile cannot be used on a different model.

### Purpose and summary of the invention

In this context, the technical purpose which forms the basis of this invention is to provide a mat which overcomes the above mentioned disadvantage of the prior art.

More specifically, the aim of this invention is to provide a mat which can be adapted to different models of motor vehicle.

A further aim of the invention is to provide a mat which can be adapted for covering different zones of a single model of motor vehicle.

The technical purpose indicated and the aims specified are achieved by a mat comprising the technical features described in one or more of the appended claims.

Further features and advantages of the invention are more apparent in the detailed description below, with reference to a preferred, non-limiting, embodiment of a mat as illustrated in the accompanying drawings, in which:

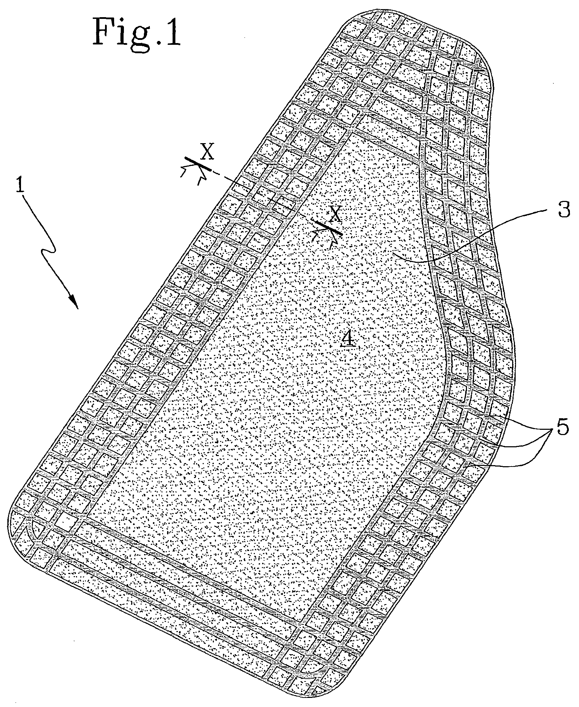

- Figure 1 is a perspective view of a mat according to the invention;
- Figures 2a and 2b are cross-sections along plane X-X of the mat of Figure 1, relative, respectively, to a first embodiment not belonging to the invention and a second embodiment belonging to the invention; and
- Figures 3a and 3b show a detail of the mat of Figure 1 respectively in the first and second embodiments.

### Detailed description

With reference to the accompanying drawings, the numeral 1 indicates a mat according to the present invention.

The mat 1 comprises a supporting layer 2 having an upper surface 2a and a lower surface 2b opposite the upper surface 2a. The layer 2 also has an outer edge, which defines the shape in plan of the mat 1.

In detail, the upper surface 2a means the exposed surface, and therefore treadable by the user. The lower surface 2b can face the floor of the vehicle, and can be directly in contact with it.

The mat 1 also comprises a plurality of filaments 3, which are anchored to the layer 2, in particular at the upper surface 2a. These filaments 3 make a "carpet effect" on the upper surface 2a of the supporting layer 2. Preferably, the filaments 3 are distributed evenly on a covering zone 4 of the supporting layer 2.

The mat 1 according to the invention as defined in claim 1 has compacted zones 5 of the above-mentioned filaments 3. The compacted zones are in particular superposed over the supporting layer 2. Moreover, the filaments 3 are compacted on the layer 2 and bonded to each other. Preferably, the covering zone 4 and the compacted zone 5 cover overall the entire upper surface 2a of the supporting layer 2. In other words, the compacted zone 5 is made acting on a portion of the covering zone 4 according to a process which will be described in more detail below, and which forms part of the invention. More specifically, it should be noted that the compacted zone 5 is defined by melting the filaments 3 together. Consequently, the single filaments 3 can no longer be identified in the compacted zone 5.

Lastly, it should be noted that in the preferred embodiment of the invention both the supporting layer 2 and the filaments 3 are made from the same material. More specifically, the material is a thermoplastic polymer, and yet more specifically it is a polypropylene. Advantageously, this allows a complete amalgamation of the filaments 3 with the underlying layer 2, in such a way as to define a homogeneous compacted zone 5.

In further embodiments, the materials of the supporting layer 2 and of the filaments 3 can be different.

More in detail, it should be noted that the compacted zone 5 has the form of a strip. In other words, the compacted zone 5 has, viewed from above, an elongate shape, wherein the main dimension is defined as the length in the context of this description, whilst the remaining dimension is defined as the width. According to the invention, the compacted zones 5 have a width of between 10 and 2 mm, preferably 4 mm.

It should also be noted that the compacted zone 5 can be a closed strip (substantially with a ring shape) or an open strip (forming in this way a segment or stretch on the upper surface 2a of the layer 2. This segment can be rectilinear or curved.

Moreover, according to the invention, the mat 1 has a plurality of compacted zones 5 which are distinct and positioned parallel to each other.

A parallel arrangement means an arrangement wherein the paths followed by each compacted zone 5 do not intersect, even if the compacted zones 5 follow curvilinear paths.

It should also be noted that, according to the invention, it is not necessary for all the compacted zones 5 to be parallel to each other.

In effect, it is possible that the compacted zones 5 are arranged in several groups, in such a way that all the compacted zones 5 of each group are or are not parallel with each other.

In further detail, it should be noted that preferably at least one of the above-mentioned compacted zones 5 can be positioned at the edge of the supporting layer 2.

In other words, the compacted zone 5 tracks the outer contour of the mat 1.

According to the invention, the function of the compacted zones 5 is to provide the user with the tracks along which to cut the mat 1, according to the requirements. For this reason, the compacted zones 5 of the mat 1 can be placed on the supporting layer 2 in such a way that each of them defines a respective track shaped in such a way as to adapt to a floor zone of a distinct motor vehicle model. In a different embodiment of the invention, it is possible to make compacted zones 5 having the shape of different zones of a floor of the same vehicle. This means that the compacted zones 5 track the contour of the appropriate shape in such a way that, by cutting the mat 1 according to the selected compacted zone 5, it is possible to give it the required shape. Advantageously, cutting the mat 1 along a compacted zone prevents the fraying or in any case the degradation of the filaments 3 which give it the carpet effect, since it avoids the filaments 3 being positioned adjacent to the edges.

If a mat is to be made with an edge effect comprising the filaments 3, this does not prevent cutting along the compacted zone very close to the filaments.

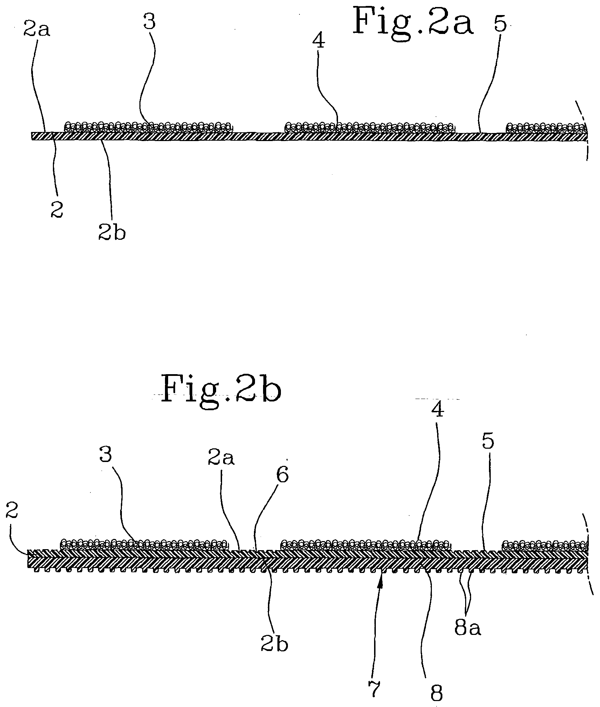

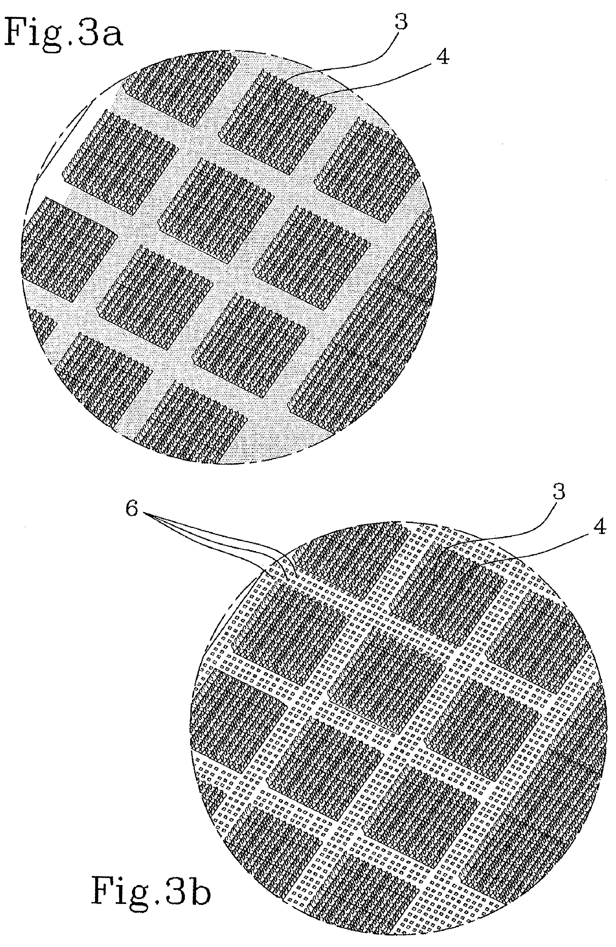

According to the invention as defined in claim 1, shown in particular in Figures 2b and 3b, the compacted zones 5 have a knurled surface. In detail, the knurling is defined by a plurality of depressions 6 positioned in the form of a grid.

More in detail, the depressions 6 are preferably square in plan view. In further detail, the depressions 6 are pyramid-shaped cavities, and preferably have sides of 1 mm.

Advantageously, the knurling of the exposed surface of the compacted zone 5 allows a greater cohesion of the zone 5 to the support 2, easier production of the mat 1 since a smaller moulding pressure is needed and, lastly, it allows a more precise cut of the mat 1 to be obtained by the user, as it acts as a guide both visual and tactile along which it is easier to operate with a cutting tool, all these advantages without also adversely affecting the appearance of the mat 1. The mat 1 according to the invention can, in an alternative embodiment, comprise grip means 7 fixed to the supporting layer 2. The grip means 7 are opposite the filaments 3, and in particular are located on the lower surface 2b of the support 2.

In detail, the grip means 7 comprise a coating 8 applied to the lower surface 2b of the layer 2. The coating 8 is equipped with protrusions 8a, which are designed to hold the layer 2 in position on the floor of a motor vehicle.

Also forming part of the invention, as mentioned above, is a method for making the above-mentioned mat 1.

Initially, a supporting layer 2 is prepared covered with filaments 3 on at least one surface 4. More specifically, it is preferable that the layer 2 is evenly covered with filaments 3 on the upper surface 4.

A pressure which is able to compress the filaments 3 is then exerted on them in predetermined zones. The filaments 3 compressed in this way are then heated until they are softened or melted, in such a way as to amalgamate the filaments 3 together and preferably with the underlying supporting layer 2. In this way the above-mentioned compacted layer 5 is created. This step is then repeated in such a way as to create all the necessary compacted zones 5 on the mat 1. If a mould of an appropriate shape is available, all the compacted zones 5 can be made in a single pressing, with a large saving in time and cost. Alternatively, it can be performed manually defining one compacted zone 5 at a time.

In a preferred embodiment it is possible to interpose a colouring material, preferably the same polymer as the filaments, directly on the mat 1 at a zone to be coloured before the pressing step.

In this way a portion of mat will be obtained coloured differently from the filaments and the support (for example, to highlight the trademark of the manufacturer or the brand\model of the vehicle).

Moreover, advantageously, the colouring is in a dry form (for example, powder, plastic sheet) in such a way that this only combines with the pressed filaments and not with those not affected by the pressing step.

After definition of the compacted zones 5 on the mat 1 has been completed, there will be a covering zone 4 on the layer 2 in the areas in which it has not been treated.

Lastly, the mat 1 is cut along a compacted zone 4, preferably the outermost of those made, in such a way as to define the edges of the layer 2; alternatively, the cutting step can be performed at the start of the production method.

It is also possible, before or after defining the compacted zones zone 5, to fix the covering 8 to the lower surface of the supporting layer 2, in such a way as to define the above-mentioned grip means 7.

The present invention also relates to a machine for making said mat 1, preferably using the method which forms part of the invention. The machine comprises means for compacting the filaments 3, which can be, for example, a press. There is also an abutment surface associated with the compacting means, in such a way as to enter into contact with the supporting layer 2, in particular with the lower layer 2b.

The machine also comprises heating means, for example an electrical resistance, associated with the compacting means in such a way as to heat them and melt the compacted filaments 3.

More in detail, the electrical resistance can be inserted directly inside the press (or mould).

Preferably, the press is made from thermally conductive material, in such a way as to heat and melt the filaments 3 during the pressing operation.

By way of example, for the production of a mat 1 made of polypropylene the optimum temperature of the heating means is between 130° and 170°, preferably between 145° and 150°.

In further detail, it should be noted that the compacting means have at least one pressing surface which can enter directly into contact with the filaments 3.

This pressing surface can be optionally provided with protrusions preferably pyramid-shaped. These protrusions are designed to define the above-mentioned depressions 6 on the compacted zone 5.

The invention achieves the set aims. More specifically, it is possible to cut the mat along the compacted zones, adapting it to a different model of motor vehicle. For the same reason, by suitably shaping the compacted zones (if necessary preparing more than one) a mat can be made which can be adapted to different zones of a same model of motor vehicle.

## Claims

1. A mat (1), comprising a supporting layer (2); a plurality of filaments (3) anchored to the layer (2); compacted zones (5) made on the layer (2) wherein the filaments (3) are compacted on the layer (2) and bonded to each other **characterized in that** the compacted zones (5) are defined by melting the filaments (3); the compacted zones (5) track the contour of the appropriate shape in such a way that, by cutting the mat (1) according to a selected compacted zone (5), the mat (1) can be given the required shape, the compacted zones (5) having a knurled surface.

2. The mat (1) according to claim 1, **characterized in that** the compacted zone (5) has the form of a strip.

3. The mat (1) according to claim 2, **characterized in that** the supporting layer (2) has an outer edge, at least one of the zones (5) being placed at the outer edge.

4. The mat (1) according to any of the preceding claims, **characterized in that** the compacted zones (5) are placed on the supporting layer (2) in such a way that each defines a respective track of a floor zone of a distinct motor vehicle model.

5. The mat (1) according to any of the preceding claims, **characterized in that** the compacted zones (5) have a width of between 10 and 2 mm, preferably 4 mm.

6. The mat (1) according to any of the preceding claims, **characterized in that** it comprises grip means (7) fixed to the supporting layer (2) and opposite the filaments (3) in order to hold the layer (2) in position on the floor of a motor vehicle.

7. The mat (1) according to any of the preceding claims, **characterized in that** the layer (2) and the filaments (3) are made of the same material, preferably polypropylene.

8. A method for making a mat (1) according to any of the preceding claims, comprising the steps of preparing a supporting layer (2) covered with filaments (3) on at least one surface of it (2a); exerting on the filaments (3) a pressure in order to compact them; heating the compacted filaments (3) in order to melt them and form the compacted zone (5).

9. A machine for making a mat (1) according to any of the claims from 1 to 7, **characterized in that** it comprises compacting means for the filaments (3); an abutment surface associated with the compacting means to come into contact with the supporting layer (2); heating means associated with the compacting means to heat and melt the compacted filaments (3).

10. A machine for making a mat (1) according to claim 9, **characterized in that** the compacting means have at least one pressing surface with a plurality of protrusions for forming corresponding depressions (6) on the compacted zone (5).

## Patentansprüche

1. Matte (1), umfassend eine Trägerschicht (2), eine Vielzahl an Filamenten (3), die an der Schicht (2) verankert sind, verfestigte Zonen (5), die auf der Schicht (2) ausgebildet sind, wobei die Filamente (3) auf der Schicht (2) verfestigt und miteinander verbunden sind, **dadurch gekennzeichnet, dass** die verfestigten Zonen (5) durch Schmelzen der Filamente (3) definiert sind, wobei die verfestigten Zonen (5) die Kontur der angemessenen Form verfolgen, sodass der Matte (1) unter Schneiden je nach ausgewählter verfestigter Zone (5) die gewünschte Form verliehen werden kann, wobei die verfestigten Zonen (5) eine gerändelte Oberfläche aufweisen.

2. Matte (1) nach Anspruch 1, **dadurch gekennzeichnet, dass** die verfestigte Zone (5) die Form eines Streifens aufweist.

3. Matte (1) nach Anspruch 2, **dadurch gekennzeichnet, dass** die Trägerschicht (2) eine äußere Kante aufweist, wobei mindestens eine der Zonen (5) an der äußeren Kante platziert ist.

4. Matte (1) nach einem der vorhergehenden Ansprüche, **dadurch gekennzeichnet, dass** die verfestigten Zonen (5) auf der Trägerschicht (2) platziert sind, sodass eine jede eine jeweilige Spur auf einem Bodenbereich eines bestimmten Motorfahrzeugmodells definiert.

5. Matte (1) nach einem der vorhergehenden Ansprüche, **dadurch gekennzeichnet, dass** die verfestigten Zonen (5) eine Breite von 10 bis 2 mm, vorzugsweise von 4 mm, aufweisen.

6. Matte (1) nach einem der vorhergehenden Ansprüche, **dadurch gekennzeichnet, dass** sie Greifmittel (7) umfasst, die an der Trägerschicht (2) fixiert und gegenständig zu den Filamenten (3) angeordnet sind, um die Schicht (2) auf dem Boden eines Motorfahrzeugs in Position zu halten.

7. Matte (1) nach einem der vorhergehenden Ansprüche, dadurch gekenntzeichnet, dass die Schicht (2) und die Filamente (3) aus demselben Material bestehen, vorzugsweise aus Polypropylen.

8. Verfahren zum Herstellen einer Matte (1) nach einem der vorhergehenden Ansprüche, umfassend die Schritte des Vorbereitens der Trägerschicht (2), verkleidet mit Filamenten (3) auf mindestens einer deren Oberflächen (2a), des Ausübens eines Drucks auf die Filamente (3), um diese zu verfestigen, des Erwärmens der verfestigten Filamente (3), um diese miteinander zu verschmelzen und die verfestigte Zone (5) zu bilden.

9. Maschine zum Herstellen einer Matte (1) nach einem der Ansprüche 1 bis 7, **dadurch gekennzeichnet, dass** sie Verfestigungsmittel für die Filamente (3) umfasst, eine Anschlagsoberfläche, die mit den Verfestigungsmittel assoziiert ist, um in Kontakt mit der Trägerschicht (2) zu kommen, Erwärmungsmittel, die mit den Verfestigungsmitteln assoziiert sind, um die verfestigten Filamente (3) zu erwärmen und zu verschmelzen.

10. Maschine zum Herstellen einer Matte (1) nach Anspruch 9, **dadurch gekennzeichnet, dass** die Verfestigungsmittel mindestens eine Pressoberfläche mit einer Vielzahl an Vorsprüngen aufweisen, um entsprechende Vertiefungen (6) auf der verfestigten Zone (5) zu formen.

## Revendications

1. Tapis (1), comprenant une couche de support (2) ; une pluralité de filaments (3) fixés à la couche (2) ; des zones compactées (5) réalisées sur la couche (2) dans lequel les filaments (3) sont compactés sur la couche (2) et collés les uns aux autres, **caractérisé en ce que** les zones compactées (5) sont définies en fondant les filaments (3) ; les zones compactées (5) suivent le contour de la forme appropriée de manière à ce que, en coupant le tapis (1) selon une zone compactée sélectionnée (5), le tapis (1) puisse avoir la forme désirée, les zones compactées (5) ayant une surface crénelée.

2. Tapis (1) selon la revendication 1, **caractérisé en ce que** la zone compactée (5) a la forme d'une bande.

3. Tapis (1) selon la revendications 2, **caractérisé en ce que** la couche de support (2) possède un bord extérieur, au moins une des zones (5) étant placée au niveau du bord extérieur.

4. Tapis (1) selon l'une quelconque des revendications précédentes, **caractérisé en ce que** les zones compactées (5) sont placées sur la couche de support (2) de sorte que chacune définit un tracé respectif d'une zone de plancher d'un modèle de véhicule automobile distinct.

5. Tapis (1) selon l'une quelconque des revendications précédentes, **caractérisé en ce que** les zones compactées (5) possèdent une largeur comprise entre 10 et 2 mm, de préférence 4 mm.

6. Tapis (1) selon l'une quelconque des revendications précédentes, **caractérisé en ce qu'**il comprend des moyens de préhension (7) fixés à la couche de support (2) et opposées aux filaments (3) afin de maintenir la couche (2) en position sur le plancher d'un véhicule automobile.

7. Tapis (1) selon l'une quelconque des revendications précédentes, **caractérisé en ce que** la couche (2) et les filaments (3) sont composés de la même matière, de préférence du polypropylène.

8. Procédé de fabrication d'un tapis (1) selon l'une quelconque des revendications précédentes, comprenant les étapes consistant à préparer une couche de support (2) recouverte de filaments (3) sur au moins une surface de celle-ci (2a) ; exercer sur les filaments (3) une pression afin de les compacter ; chauffer les filaments compactés (3) afin de les fondre et de former la zone compactée (5).

9. Machine de fabrication d'un tapis (1) selon l'une quelconque des revendications de 1 à 7, **caractérisée en ce qu'**elle comporte des moyens de compactage destinées aux filaments (3) ; une surface de butée associée aux moyens de compactage pour venir en contact avec la couche de support (2) ; des moyens de chauffage associés aux moyens de compactage pour chauffer et fondre les filaments compactés (3).

10. Machine de fabrication d'un tapis (1) selon la revendication 9, **caractérisée en ce que** les moyens de compactage possèdent au moins une surface de pression dotée d'un pluralité de saillies destinées à former des enfoncements correspondants (6) sur la zone compactée (5) .
